# EUROPEAN PATENT APPLICATION

(11) **EP 2 733 587 A2**
(43) Date of publication of application: **21.05.2014**
(21) Application number: 13020128.8
(22) Date of filing: 12.11.2013
(51) Int. Cl.: G06F 3/041

(54) **Method of manufacturing touch panel sensor, and touch panel sensor**

(30) Priority: 15.11.2012 JP 2012251285
(71) Applicant: Sumitomo Heavy Industries, Ltd., Tokyo 141-6025 (JP)
(72) Inventor: Iwata, Hiroshi, Tokyo 141-6025 (JP); Murakami, Yoshinobu, Niihama-shi Ehime 792-8588 (JP)
(74) Representative: Schmidbauer, Andreas Konrad

(57) **Abstract**

To provide a touch panel sensor of which the appearance can be improved without decreasing the performance, and the method of manufacturing the same.

A portion corresponding to a second region 20B becomes to be in a peroxide state by oxygen or oxygen ions being implanted, and becomes a insulation part 12B that does not have conductivity. On the other hand, since a resist 20 remains on a first region 20A, a transparent conductive layer 12 is in a state of being covered by the resist 20. Therefore, this portion is patterned in a. pattern corresponding to the first region 20A of the resist 20 as a conductive part 12A. In this way, an electrical patterning is performed on the transparent conductive layer 12. On the other hand, since the conductive part 12A and the insulation part 12B are formed of an optically same material in same film thicknesses, the pattern shape of the conductive part 12A is in an invisible state. That is, it is possible to make a state of optically not patterned.

## Description

### Technical Field

The present invention relates to a method of manufacturing a touch panel sensor and the touch panel sensor.

### Background Art

A touch panel sensor in which a transparent conduction layer having a predetermined pattern is formed on a substrate, is known. For example, in a method of manufacturing the touch panel sensor disclosed in Patent Literature 1, the pattern is formed by etching the transparent conduction film after the photo-lithography process in which a predetermined pattern is exposed on a resist.

### Citation List

### Patent Literature

[PTL 1] Japanese Unexamined Patent Application Publication No. 2012-164079

### Summary of Invention

### Technical Problem

However, in the touch panel sensor manufactured by the method disclosed in Patent Literature 1, when the touch panel is used as a touch panel, since there is a portion where the transparent conduction film pattern is formed and a portion where the transparent conduction film pattern is not formed, there is a problem in that the pattern of the transparent conduction film is visible. In a case where the transparent conduction film is formed to be thin in order to prevent the pattern of the transparent conduction film from being seen, the noise when the touch panel is operated increases, due to the increase of the sheet resistance value. Thus, there is a problem in that it may cause an erroneous operation.

Therefore, an object of the present invention is to provide a touch panel sensor of which an appearance can be improved without decreasing a performance, and a method of manufacturing a touch panel sensor.

### Solution to Problem

A method of manufacturing a touch panel sensor according to the present invention includes a substrate and a transparent conductive layer formed on the substrate. The method includes: a preparation step of preparing the substrate on which the transparent conductive layer is formed; an installation step of installing a patterning member that has patterns in which a first region covering the transparent conductive layer and a second region causing the transparent conductive layer to be exposed are formed; a patterning step of forming an insulation part by implanting at least one of irradiation object out of oxygen, oxygen ions, nitrogen, nitrogen ions, nitrogen oxide, and nitrogen oxide ions into the transparent conductive layer in the portion corresponding to the second region, and for patterning the transparent conductive layer in the portion covered by the first region as a conductive part; and a removing step of removing the patterning member from the transparent conductive layer.

According to the method of manufacturing a touch panel sensor in the present invention, on the portion corresponding to the second region of the patterning member, the transparent conductive layer is in an exposed state. Therefore, this portion becomes to be in a peroxide state by oxygen or oxygen ions being implanted, and becomes the insulation part that does not have conductivity. In addition, since nitrogen compound having insulating properties is formed on this portion by nitrogen, nitrogen ions, nitrogen oxide, or nitrogen oxide ions being implanted, this portion becomes the insulation part that does not have conductivity. On the other hand, on the portion corresponding to the first region of the patterning member, the transparent conductive layer is in a state of being covered by the resist. Therefore, by oxygen, oxygen ions, nitrogen, nitrogen ions, nitrogen oxide, or nitrogen oxide ions without being implanted, this portion is patterned in a pattern corresponding to the first region of the patterning member as the conductive part that remains the conductivity. In this way, an electrical patterning is performed on the transparent conductive layer. On the other hand, since the conductive part and the insulation part are formed of a same material in same film thicknesses, the pattern shape of the conductive part is in an invisible state. That is, it is possible to make a state of optically not patterned. Since it is possible to make the pattern not to be seen even without making the thickness of the transparent conductive layer thin, the performance as the touch panel sensor can be maintained. As a result, it is possible to improve the appearance of the touch panel sensor without decreasing the performance.

The method of manufacturing a touch panel sensor according to the present invention may further include: forming a resist on the transparent conductive layer; and installing the patterning member on the transparent conductive layer by causing the resist of the portion corresponding to the first region to be remained and removing the resist of the portion corresponding to the second region from the transparent conductive layer. In this way, since the patterning member can be installed for each touch panel sensor, it is possible to accurately form the conductive part and the insulation part.

The method of manufacturing a touch panel sensor according to the present invention may further include installing the patterning member on the transparent conductive layer by preparing the patterning member on which the first region and the second region are formed in advance and disposing the patterning member on the transparent conductive layer. In this way, since the patterning member can be reused multiple times, it is possible to reduce the cost.

The method of manufacturing a touch panel sensor according to the present invention may further include an etching step of etching a surface of the insulation part by irradiating the irradiation object having a lower energy than that of the irradiation object implanted in the patterning step. According to this method, by making the insulation part thin, it is possible to make the optical conditions between the conductive part and the insulation part to be more closed.

A touch panel sensor, according to the present invention includes: a substrate; and a transparent conductive layer formed on the substrate, in which the transparent conductive layer includes a conductive part that has a predetermined pattern, and an insulation part of which an amount of at least one of the oxygen, nitrogen, and nitrogen oxide is larger than that of the conductive part.

According to the touch panel sensor in the present invention, the same effect as in the method of manufacturing a touch panel sensor described above can be obtained.

### Advantageous Effects of Invention

According to the present invention, it is possible to improve an appearance of a touch panel sensor without decreasing a performance.

### Brief Description of Drawings

FIG. 1 is a block configuration diagram illustrating an embodiment of a method of manufacturing a touch panel sensor in the present invention.
FIGS. 2A and 2B are diagrams illustrating a configuration of the touch panel sensor in the embodiment of the present invention.
FIGS. 3A and 3B are diagrams illustrating a configuration of the touch panel sensor in the embodiment of the present invention.
FIG. 4 is a flow chart illustrating a content of the method of manufacturing the touch panel sensor in the embodiment of the present invention.
FIGS. 5A to 5C are schematic diagrams illustrating contents of each process illustrated in FIG. 4.
FIGS. 6A to 6C are schematic diagrams illustrating contents of each process illustrated in FIG. 4.
FIG. 7A is a diagram illustrating a configuration of the touch panel sensor in the embodiment of the present invention, and FIG. 7B is a diagram illustrating a configuration of a touch panel sensor in a comparative example.
FIGS. 8A to 8C are schematic diagrams illustrating a structure of a touch panel sensor in a modification example and a method of manufacturing thereof.
FIG. 9 is a graph illustrating a relationship between an implanted amount of oxygen ion and a sheet resistance.
FIG. 10 is a graph illustrating a relationship between the implanted amount of oxygen ion and parallel deviation of a reflectance.
FIG. 11 is a graph illustrating a relationship between the reflectance and a wavelength in an insulation portion and a conduction portion.

### Description of Embodiments

Hereinafter, a method of manufacturing a touch panel sensor and an embodiment of the touch panel sensor according to the present invention will be described with reference to the drawings attached hereto. In describing the drawings, the same elements will be referenced by the same numerals, and the description will not be duplicated.

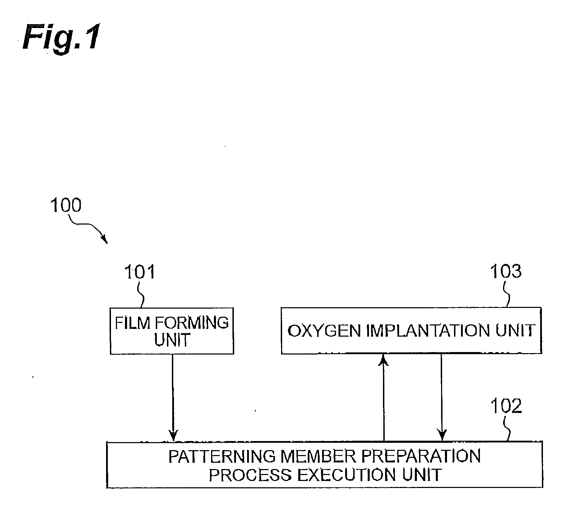

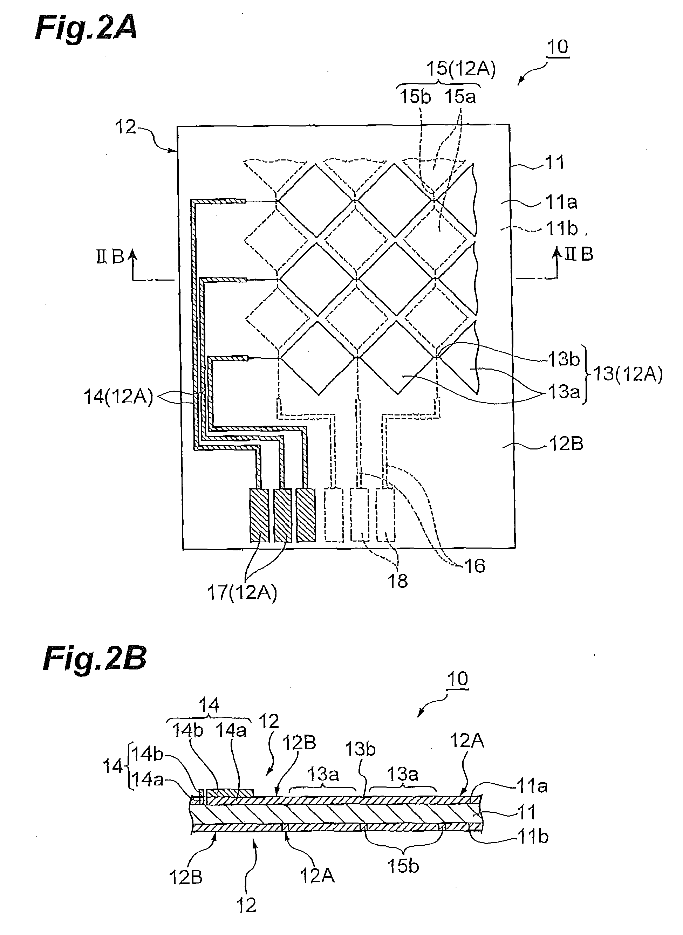

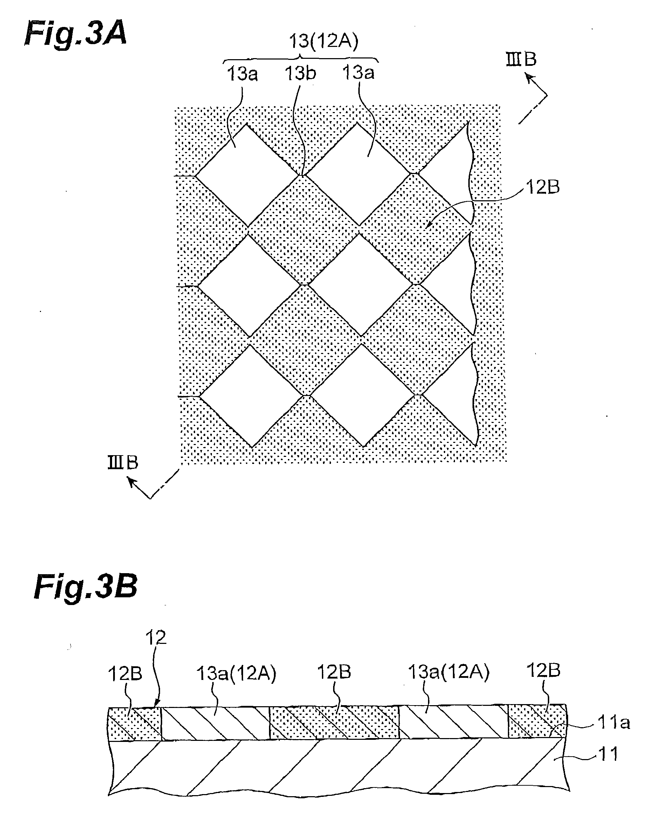

FIG. 1 is a block configuration diagram illustrating an embodiment of a manufacturing apparatus 100 for manufacturing a touch panel sensor 10 according to the present invention. FIGS. 2A, 2B, and FIG. 3 are diagrams illustrating configurations of the touch panel sensor 10 in the embodiment.

### Touch panel sensor

First, the touch panel sensor 10 will be described with reference to FIGS. 2A, 2B, and FIG. 3. The touch panel sensor 10 is a device that detects a contact position or an approaching position of the external conductive body (for example, a finger of a person) to the touch panel sensor 10, and transmits the signal based on the detection externally. The touch panel sensor 10 includes a substrate 11 and a transparent conductive layer 12 (TCO: Transparent Conductive Oxide). The transparent conductive layer 12 includes a conductive part 12A and an insulation part 12B. As described in FIGS. 2A and 2B, by patterning of the conductive part 12A of the transparent conductive layer 12, a plurality of first detection parts 13 and second detection parts 15 are provided on the substrate 11 so as to have predetermined patterns, and first take-out parts 14 and second take-out parts 16 connected to the detection parts 13 and 15 respectively are provided so as to have predetermined patterns (However, in a case where the take-out parts 14 and 16 are formed of only metal materials, patterning of the conductive part 12A of the take-out parts 14 and 16 is not performed). In this way, the touch panel sensor 10 includes the plurality of the first detection parts 13 and the second detection parts 15, and the first take-out parts 14 and the second take-out parts 16. Among these, the first detection parts 13 and the first take-out parts 14 are provided on one surface 11a of the substrate 11, and the second detection parts 15 and the second take-out parts 16 are provided on the other surface 11b of the substrate 11. In addition, a first terminal part 17 and a second terminal part 18 for taking out the signals from the plurality of the first detection parts 13 and the second detection parts 15 to outside, are connected to the first take-out parts 14 and the second take-out parts 16 respectively. In FIG. 2A, the configuration elements provided on the other surface 11b of the substrate 11 are illustrated in dashed lines.

The first detection parts 13 and 15 detect the contact position or the approaching position of the external conductive body. Among these, the first detection part 13 detect the contact position or the approaching position of the external conductive body in a first direction (vertical direction in FIG. 2A). As illustrated in FIG. 2A, the first detection parts 13 include: a plurality of first electrode units 13a that have substantially square shapes; and first connection parts 13b that are connected to the adjacent first electrode units 13a in between, in the second direction (horizontal direction in FIG. 2A) which is orthogonal to the first direction. In addition, the second detection parts 15 detect the contact position or the approaching position of the external conductive body in a second direction. As illustrated in FIG. 2A, the second detection parts 15 include: a plurality of second electrode units 15a that have substantially square shapes; and second connection parts 15b that is connected to the adjacent second electrode units 15a in between, in the first direction.

In addition, the take-out parts 14 and 16, and the terminal parts 17 and 18 configure the path for transmitting the electric signals from the detection parts 13 and 15 based on the detection of the contact position or the approaching position of the external conductive body, to outside.

The transparent conductive layer 12 is formed to cover substantially entire surface of the substrate 11. The transparent conductive layer 12 includes the conductive part 12A formed as a predetermined pattern and the insulation part 12B in which an amount of oxygen is larger than in the conductive part 12A. In the transparent conductive layer 12, by injecting oxygen in a state that the position corresponding to the conductive part 12A is covered with the resist which is patterned same as the shape and position of the conductive part 12A, and then, the insulation part 12B is formed on the position not covered with the resist. The insulation part 12B is formed by injecting oxygen to the transparent conductive layer 12, decreasing the number of oxygen vacancies in the transparent conductive layer 12, and then decreasing the carrier density. Here, the word "oxygen" includes an oxygen ion, oxygen radicals, and an oxygen atoms.

The touch panel sensor 10 is combined with a display device (not illustrated) such as a liquid crystal display device, whereby a touch panel is configured. Generally, the display device is partitioned as a display area where an image is displayed and a non-display area positioned outside the display area. In addition, generally, at the time of combining, the touch panel sensor 10 and the display device are combined such that the detection parts 13 and 15 of the touch panel sensor 10 correspond to the display area of the display device. For this purpose, the detection parts 13 and 15 are configured from the conductive part 12A having conductivity and transparency of the transparent conductive layer 12. Then, in the present embodiment, the positions other than the detection parts 13 and 15 on the display area are configured from the insulation part 12B of the transparent conductive layer 12, which has transparency and does not have conductivity.

As illustrated in FIGS. 3A and 3B, patterns of the detection parts 13 are configured on the conductive part 12A (in FIGS. 3A and 3B, the position corresponding to the position not dotted on the transparent conductive layer 12), and the vicinity portion of the conductive part 12A other than the portion of the conductive part 12A is configured on the insulation part 12B (in FIGS. 3A and 3B, the position corresponding to the dotted position on the transparent conductive layer 12). Examples of the materials to be used for the transparent conductive layer 12 includes: indium tin oxide (ITO), zinc oxide, indium oxide, antimony doped tin oxide, fluorine doped tin oxide, aluminum doped zinc oxide, potassium doped zinc oxide, silicon doped zinc oxide, and metal oxides such as zinc oxide-tin oxide, indium oxide-tin oxide, zinc oxide-indium oxide-magnesium oxide. Two or more of these metal oxides may be combined to be used. In addition, the thickness of the transparent conductive layer 12 is set to be, for example, approximately 5 to 35 nm, but not limited to this number. In addition, materials with excellent optical transparency, stability, and the durability are used for the substrate 11. For example, resins such as PET and glass, PEN and PMMA, or a transparent crystal material may be used.

As illustrated in FIGS. 2A and 2B, the take-out parts 14 and 16, and the terminal parts 17 and 18 are also formed in patterns by a similar process in the detection parts 13 and 15, the take-out parts 14 and 16, and the terminal parts 17 and 18 are formed to include the conductive part 12A of the transparent conductive layer 12, and the vicinity portion other than a take-out parts 14 and 16, and the terminal parts 17 and 18 may be formed on the insulation part 12B. However, the take-out parts 14 and 16, and the terminal parts 17 and 18 are generally provided on the position that corresponds to the non-display area of the display device. For this reason, the take-out parts 14 and 16, and the terminal parts 17 and 18 do not need to have transparency. Therefore, the take-out parts 14 and 16, and the terminal parts 17 and 18 may be formed to include a metal material having higher electric conductivity than that of the conductive part 12A of the transparent conductive layer 12. For example, as illustrated in FIG. 2B, the first take-out part 14 may be formed to include a take-out pattern part 14a which is formed by patterning the conductive part 12A in a shape of the first take-out part 14, and a metal film 14b which is formed on the take-out pattern part 14a of the conductive part 12A. For example, metal such as aluminum (Al), molybdenum, palladium, silver (Ag), chromium, copper, and metal alloy thereof, or a laminated body including such metal alloy, may be used as the metal materials. As an example of the metal alloy that contains silver, APC alloy in which silver, palladium, and copper are contained can be included. The take-out parts 14 and 16, and the terminal parts 17 and 18 may be configured to include the pattern part by the conductive part 12A, and the metal film, or may be configured to include only the pattern part of the conductive part 12A, or may be configured to include only the metal film. In a case where the take-out parts 14 and 16, and the terminal parts 17 and 18 are configured to include only the metal film, the metal film is formed on the insulation part 12B. The metal film and the conductive part 12A of the detection parts 13 and 15 are electrically connected to each other. In addition, at the position which corresponds to the non-display area of the display device, the transparent conductive layer 12 may not be formed.

### Apparatus for manufacturing the touch panel sensor

As illustrated in FIG. 1, a manufacturing apparatus 100 for manufacturing the touch panel sensor 10 includes a film forming unit 101 that forms the transparent conductive layer 12 on the substrate 11, a patterning member preparation process execution unit 102 that patterns the conductive part 12A of the transparent conductive layer 12 by a photo-lithography process, and an oxygen implantation unit 103 that implants oxygen into the transparent conductive layer 12 and forms the insulation part 12B.

The film forming unit 101 is configured by a film forming apparatus that forms the transparent conductive layer 12 with respect to the substrate 11. The method of film forming is not limited to that adopted to the film forming unit 101, but any method of film forming may be adopted. For example, a DC sputtering method, an RF sputtering method, AC sputtering method, and the like may be adopted, in which the transparent conductive layer 12 is formed in film on the substrate 11 by applying the voltage on the target made of a material for film.
In addition, an ion plating method may be adopted, in which the transparent conductive layer 12 is formed in film by ionizing the film forming material using plasma, and causing the ions to be adhered on the substrate 11. In addition, a vacuum deposition method, a printing method, a spin coating method or other coating method (such as an application method) and the like may be adopted. Furthermore, the substrate 11 may be used, on which the transparent conductive layer 12 is formed in advance outside the manufacturing apparatus 100, in this case, the film forming unit 101 from the manufacturing apparatus 100 may be omitted.

In order to execute the process of preparing the patterning member, the patterning member preparation process execution unit 102 is configured to include the combination of the apparatuses used in each process. The patterning member is provided on the transparent conductive layer 12 when the oxygen implantation unit 103 implants the oxygen into the transparent conductive layer 12. The patterning member has a pattern in which a first region that covers the transparent conductive layer 12 and a second region (through hole) that exposes the transparent conductive layer 12 are formed. The patterning member may be configured from the photo-resist that is patterned by the photo-lithography process, or may be configured from a mask that is used in masking method (a method in which a mask on which the first region and the second region are formed in advance is deposed on the transparent conductive layer 12). In a case where the patterning member is configured from the photo-resist that is patterned by the photo-lithography process, in order for executing the photo-lithography process, the patterning member preparation process execution unit 102 is configured to include the combination of the apparatuses used in each process. The patterning member preparation process execution unit 102 is configured to include an apparatus for applying the photo-resist, an apparatus for exposing the pattern on the photo-resist, an apparatus for developing the photo-resist, and an apparatus for removing the photo-resist after oxygen ion implantation. In a case where the masking method is adopted, the patterning member preparation process execution unit 102 is configured to include an apparatus for creating the patterning member, (or a member created outside the manufacturing apparatus 100 may be used), an apparatus that disposes the patterning member on the transparent conductive layer 12 and recover it, and the like.

The oxygen implantation unit 103 is configured to include an apparatus that implants oxygen into the transparent conductive layer 12 on the substrate 11. In the embodiment, the oxygen implantation unit 103 is configured to include an apparatus that implants oxygen ion. The method adopted in the oxygen implantation unit 103 is not particularly limited, and any method may be adopted. For example, an ion implanting apparatus may be adopted that performs ion implanting on the substrate 11, after the ion beam is deflection scanned and collimated by the electrostatic field. Alternatively, a plasma doping apparatus that ionizes the oxygen using a high-frequency discharge and performs doping on the substrate 11 may be adopted. Alternatively, a linear ion source may be adopted. Alternatively, a method in which oxygen radicals, which are oxygen ions neutralized by using a neutralizer, are implanted may be adopted.

### Method of Manufacturing the Touch Panel Sensor

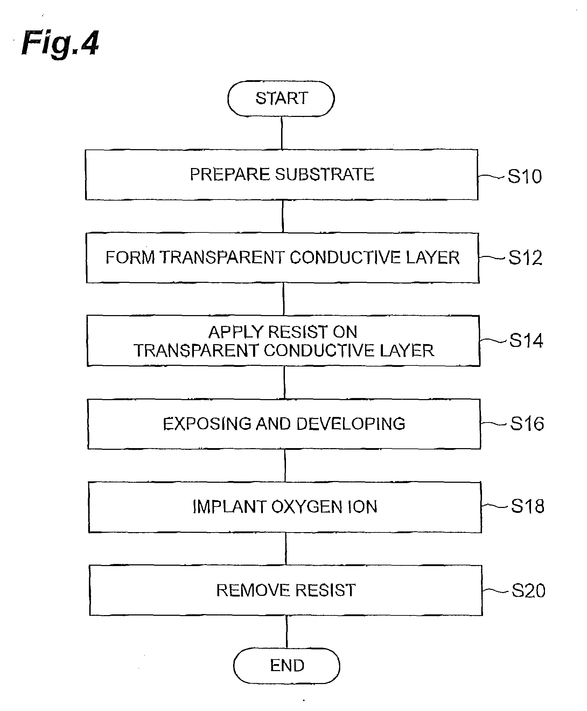

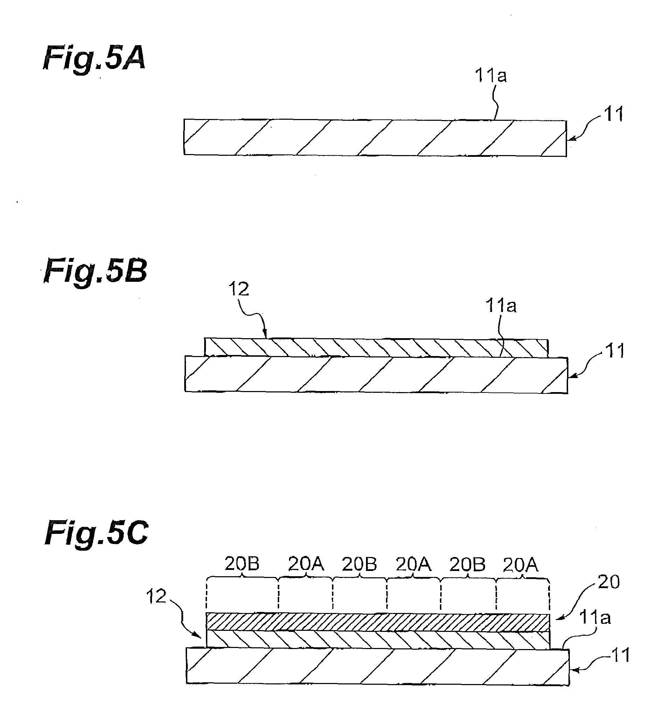

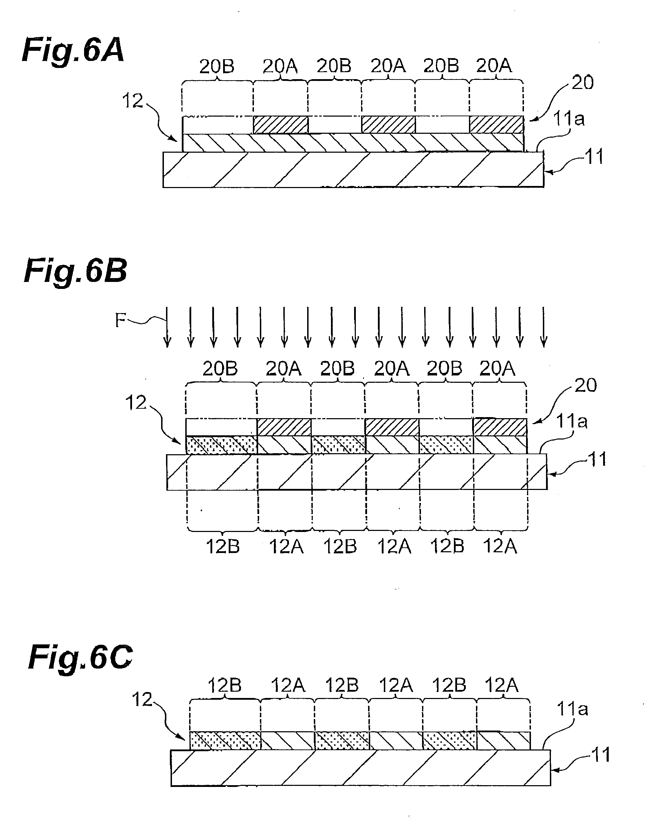

Next, the method of manufacturing the touch panel sensor 10 will be described with reference to FIG. 4 to FIG. 6C. FIG. 4 is a flow chart illustrating a content of the method of manufacturing the touch panel sensor 10 in the embodiment. FIGS. 5A to 5C and FIGS. 6A to 6C are schematic diagrams illustrating contents of each process illustrated in FIG. 4. As illustrated in FIG. 4, first, the processing starts with the process for preparing the substrate 11 (STEP S10: preparation process). As illustrated in FIG. 5A, in the process S10, the substrate 11 set to be a predetermined size is prepared and transported to the film forming unit 101. Next, the process for forming the transparent conductive layer 12 on the substrate 11 is performed (STEP S12: preparation process). As illustrated in FIG. 5B, transparent conductive layer 12 formed as a film forming on one surface 11a of the substrate 11. The processing in S12 is performed in the film forming unit 101. By completion of the S10 and S12, the process of preparing the substrate 11 on the surface of which the transparent conductive layer 12 is formed is completed. Here, a substrate 11 on the surface of which the transparent conductive layer 12 is formed in advance outside the manufacturing apparatus 100, may be prepared.

Next, the process of forming the resist 20 is performed by applying the resist material on the transparent conductive layer 12 (STEP S14: installation process) As the resist material, for example, novolac-type phenolic resin or epoxy resin and the like may be adopted. As illustrated in FIGS. 5A to 5C, in S14, the resist 20 is formed on the entire surface of the transparent conductive layer 12. The resist 20 is partitioned as a first region 20A which remains on the transparent conductive layer 12 at the time of developing, and a second region 20B which is removed to become a through hole at the time of developing. The first region 20A has a predetermined pattern corresponding to the conductive part 12A, and covers the transparent conductive layer 12 at the time of oxygen ion implanting, and then, the covered portion is patterned as the transparent conductive layer 12. The second region 20B is formed on the position corresponding to the insulation part 12B, and exposes the transparent conductive layer 12 such that oxygen ion is implanted into the exposed portion, and then, the insulation part 12B is formed.

Next, the process of performing the developing in addition to exposing of the pattern on the resist 20 is performed (STEP S16: installation process). First, a non-illustrated photo mask is disposed over the resist 20. In the photo mask, the pattern of the conductive part 12A is formed. The pattern is exposed by illuminating light to the resist 20 via the photo mask. Then, as illustrated in FIG. 6A, by performing the developing, the first region 20A of the resist 20 corresponding to the transparent conductive layer 12 remains, and the second region 20B of the resist 20 corresponding to the insulation part 12B is removed. The processes S14 to S16 is executed by the patterning member preparation process execution unit 102.

Next, the process of implanting the oxygen ion into the transparent conductive layer 12 via the resist 20 is performed (STEP S18: patterning process). As illustrated in FIG. 6B, the oxygen ion is implanted by irradiating the oxygen ion F to the portion of the transparent conductive layer 12 which are not covered by the resist 20 is not covered (the portion corresponding to the second region 20B). That portion of the transparent conductive layer 12 is excessively oxidized and becomes the insulation part 12B. On the other hand, the oxygen ion F is not irradiated to the portion where the transparent conductive layer 12 is covered by the resist 20 (the portion corresponding to the first region 20A), thus the oxygen ion is not implanted, and the portion is patterned as the conductive part 12A. The process S18 is executed by the oxygen implantation unit 103. Next, the process of removing the resist 20 is performed (STEP S20: removing process). As illustrated in FIG. 6C, the portion corresponding to the first region 20A of the remained resist 20 is removed from the transparent conductive layer 12. The processing in S20 is executed by the patterning member preparation process execution unit 102, In this way, the electrical patterning of the transparent conductive layer 12 is completed and the process illustrated in FIG. 4 ends.

Moreover, in a case where the masking method is adopted instead of the photo-lithographic process described above, a process of preparing a patterning member in which the first region 20A and the second region 20B are formed in advance and a process of disposing the patterning member on the transparent conductive layer 12 are executed instead of the processes in S14 and S16. In addition, a process of recovering the patterning member from the transparent conductive layer 12 is executed instead of the process in S20. In addition, in a case where the oxygen (neutralized oxygen radical) is implanted instead of the process of oxygen ion implanting described above, oxygen (neutralized oxygen radical) is implanted by irradiating oxygen flux to the portion of the transparent conductive layer 12 where the resist 20 is not covered (the portion corresponding to the second region 20B).

According to the method in which the patterning member is provided on the transparent conductive layer 12 by executing the photo-lithographic process described in FIG. 4, since the patterning member can be provided for each touch panel sensor, it is possible to accurately form the conductive part 12A and insulation part 12B. On the other hand, according to the method in which the masking method is adopted, since the patterning member can be reused multiple times, it is possible to reduce the cost.

Next, the acts and the effects of the touch panel sensor 10 and the method of manufacturing the same according to the embodiment will be described.

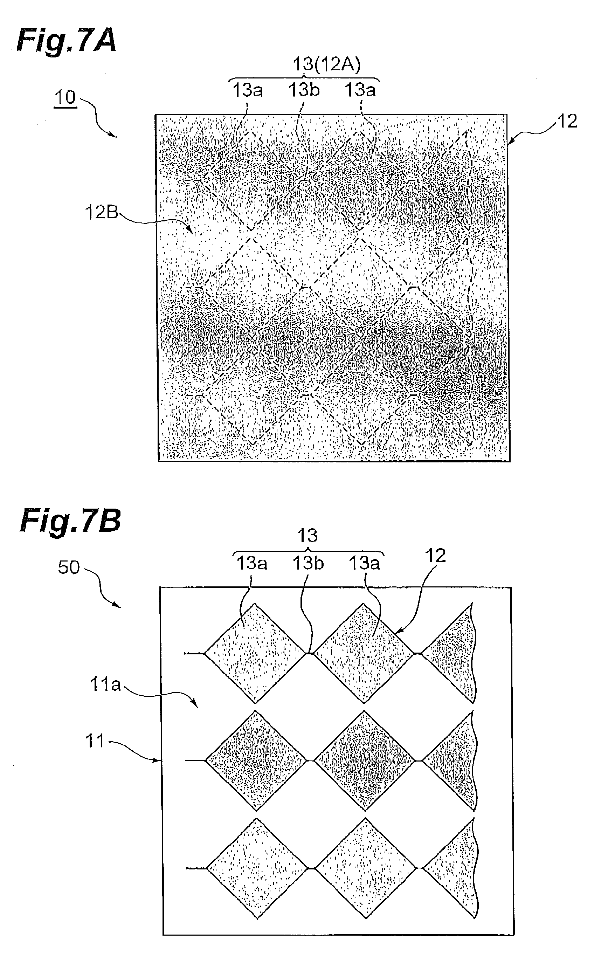

First, the configuration of the touch panel sensor 50 in the comparative example will be described. As illustrated in FIG. 7B, in the touch panel sensor 50, the transparent conductive layer 12 is patterned only on the portion corresponding to the detection part 13 and the like (the transparent conductive layer 12 is formed on the portion painted in gray scale). On the other hand, the other portion is in a state that one surface 11a of the substrate 11 is exposed. Since the optical property is different between the portion where the transparent conductive layer 12 is formed and the portion where the transparent conductive layer 12 is not formed, the pattern of the transparent conductive layer 12 can be seen. That is, the optical pattering is also performed as well as the electrical patterning with respect to the substrate 11. Therefore, when the touch panel sensor 50 is incorporated in the touch panel, there is a problem in that the pattern of the transparent conductive layer 12 is visible. Here, in a case where the transparent conductive layer 12 is formed to be thin in order to make the pattern difficult to be seen, the sheet resistance value increases, and the noise at the time of operating the touch panel increases. Thus, there is a problem in that the erroneous operation may be easily occur.

On the other hand, according to the method of manufacturing the touch panel sensor 10 in the embodiment, since the resist 20 on the portion corresponding to the second region 20B is removed, the transparent conductive layer 12 is in the exposed state. Therefore, that portion becomes the insulation part 12B which does not have conductivity because the oxygen vacancies decrease and the carrier density decreases by the oxygen ion being implanted. On the other hand, since the resist 20 remains in the first region 20A, the first region 20A is in a state that the transparent conductive layer 12 is covered by the resist 20. Therefore, the oxygen ion is not implanted to that portion, and the portion is patterned to the pattern corresponding to the first region 20A of the resist 20 as the conductive part 12A having conductivity. In this way, the electrical patterning is performed on the transparent conductive layer 12. On the other hand, since the conductive part 12A and the insulation part 12B are formed of optically same material and in a same thickness, the conductive part 12A is in a state that the shape of the pattern thereof is not visible. That is, optically, it is possible to be in a state that the patterning is not performed. Moreover, by the oxygen ion being irradiated, the surface of the film of the insulation part 12B is slightly etched, and the film thickness may be slightly thinner than that of the conductive part 12A. However, if the state is that the difference in optical properties due to the difference in thickness between the conductive part 12A and the insulation part 12B is small (the pattern of the transparent conductive layer 12 is not seen), the thickness of the conductive part 12A and the thickness of the insulation part 12B may not be completely matched. That is, the words "the same film thickness" not only include the case where the film thicknesses are completely matched but also include the case where the film thicknesses are slightly different.

As illustrated in FIG. 7A, since the detection part 13 of the touch panel sensor 10 is configured from the conductive part 12A formed in the insulation part 12B so as to have a predetermined pattern, it is possible to exert the similar function to the detection part 13 of the touch panel sensor 50 in the comparative example in FIG. 7B. on the other hand, as illustrated in gray scale in FIG. 7A, the entire substrate 11 is covered by the transparent conductive layer 12 formed of optically same material and in a same thickness. Therefore, in appearance, the boundary of the conductive part 12A and the insulation part 12B cannot be seen.

Therefore, since it is possible to make the pattern not to be visible even with the thickness of the transparent conductive layer 12 being thin, it is possible to maintain the performance as the touch panel sensor 10. As a result of the above, it is possible to improve the appearance of the touch panel without decreasing the performance. Moreover, since the transparent conductive layer 12 is formed on the substrate 11 with a constant thickness, it is physically possible to make a configuration in which the unevenness of the surface can be avoided. Accordingly, the touch panel in the embodiment has merits in physical shapes as well as merits in appearance. In addition, as in the related arts, in a case where the transparent conductive layer is largely etched, the transparent conductive layer becomeing thin, and the waviness (warp) in the touch panel substrate has occurred. On the other hand, when the method according to the embodiment described above is used, since the electrode can be patterned without largely etching the transparent conductive layer, it is possible to suppress the waviness (warp) without forming the transparent conductive layer thin.

The present invention is not limited to the embodiment described above. For example, the pattern of the conductive part 12A in the embodiment described above is only an example, any pattern may be adopted. In addition, the manufacturing apparatus and the method of manufacturing are also only examples, as long as the transparent conductive layer 12 having the conductive part 12A and the insulation part 12B can be formed, any manufacturing apparatus and the method of manufacturing may be adopted.

In the embodiment described above, the insulation part is formed by implanting the oxygen ion into the transparent conductive layer, but not limited thereto. That is, the insulation part may be formed by implanting at least any one of the irradiated objects of oxygen, oxygen ion, nitrogen, nitrogen ions, nitrogen oxide and nitrogen oxide ions into the transparent conductive layer. For example, N₂O⁺, N₂O^{*}, O₃⁺, O₂⁺, O₃^{*}, O₂^{*}, O⁺, O^{*}, N⁺, N^{*}, N₂⁺, N₂^{*}, and the like may be implanted. In the insulation part, at least any one of the amount of oxygen, the amount of nitrogen, and the amount of nitrogen oxides is larger than that in the conductive part. In a case where the oxygen is implanted into the transparent conductive layer, the portion where the oxygen is implanted is in a peroxide state, and becomes the insulation part which does not have conductivity. In addition, in a case where nitrogen, nitrogen ion, nitrogen oxide, or nitrogen oxide ion is implanted, since nitrogen compound having conductivity are generated in the portion where those are implanted, the portion becomes an insulation part which does not have conductivity. Moreover, the refractive index of light in the implanted portion is closer to that in the conductive part in a case where the oxygen or oxygen ion is implanted compared to the case where nitrogen, nitrogen ion, nitrogen oxide, or nitrogen oxide ion is implanted, it is possible to make the boundary of the conductive part and the insulation part difficult to be seen.

In addition, instead of implanting the oxygen or oxygen ion, in a case where nitrogen, nitrogen ion, nitrogen oxide, or nitrogen oxide ion is implanted, the oxygen implantation unit 103 illustrated in FIG. 1 becomes a nitrogen implantation unit, and the process of implanting the oxygen ion (STEP S18) illustrated in FIG. 4 becomes a process of implanting nitrogen.

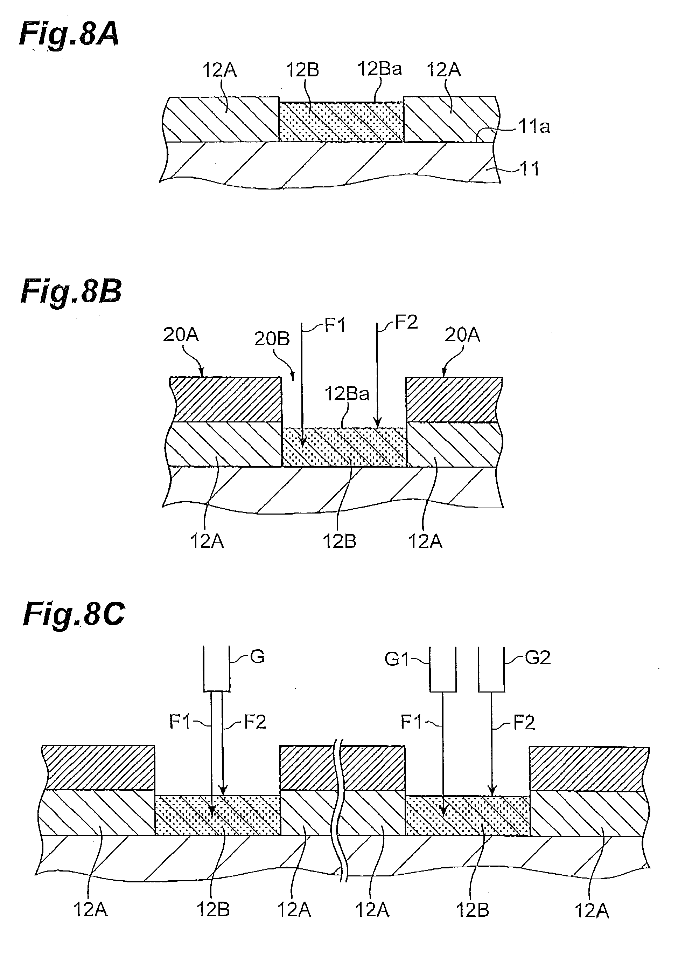

In addition, as illustrated in FIGS. 8A to 8C, the transparent conductive layer 12 in the portion corresponding to the second region 20B (that is, the insulation part 12B) may be thinner than the transparent conductive layer 12 in the portion corresponding to the first region 20A (that is, the conductive part 12A). There is a case that reflectance of the transparent conductive layer 12 in the portion corresponding to the second region 20B is slightly high because the refraction index is slightly high when ions or the like are implanted. Therefore, by forming that portion thin, it is possible to make the optical conditions between the conductive part 12A and the insulation part 12B to be more closer. Specifically, the thickness of the insulation part 12B may be 70% to 99% to that of the conductive part 12A.

Specifically, as illustrated in FIG. 8B, the etching of the transparent conductive layer 12 in the portion corresponding to the second region 20B may be performed (etching process) by irradiating the ion having an energy lower than the energy at the time when the insulation part 12B is formed, with respect to the transparent conductive layer 12 in the portion corresponding to the second region 20B (the portion which is the insulation part 12B). For example, in a case where the insulation part 12B is formed by the oxygen ion implanting, the energy of the implanted ions F1 is set to be so high that it obtains an implantation depth to be commensurate with the thickness of the transparent conductive layer 12. On the other hand, with regard to the portion corresponding to the second region 20B, by irradiating the ions F2 having so low so low it can reach as far as at the surface layer of the transparent conductive layer 12, it is possible to perform etching by cutting the surface 12Ba of the portion. When the ion F2 is irradiated for etching, only the amount of ion current that is commensurate with the desired amount of etching is irradiated.

A specific example of the energy of the ion for implantation and the energy of the ion for etching will be described. For example, in a case where the thickness of the transparent conductive layer 12 (ITO) is 30 nm, the energy of ion for implantation is set to 12 keV and the energy of ion for etching is set to 3 keV. In addition, the portion corresponding to the insulation part 12B of the transparent conductive layer 12 is etched up to 25 nm.

The same element may be used for both of the ion for implantation and the ion for etching. For example, in a case where the insulation part 12B is formed by implanting the oxygen ion, the etching may be performed using oxygen ion. In addition, the element for the ion for implantation and the element for the ion for etching may be different. For example, in a case where the insulation part 12B is formed by implanting the oxygen ion, the etching may be performed using argon ion.

In addition, as illustrated in FIG. 8C, the ion F1 with high energy for implanting and the ion F2 with low energy for etching may be radiated from the same ion gun G. The ion gun in this case irradiates using ion F1 with high energy for implanting and the ion F2 with low energy for etching by providing with a time difference. In addition, the ion F1 with high energy for implanting and the ion F2 with low energy for etching may be irradiated from two different ion guns G1 and G2. In this case, the ion F1 with high energy for implanting is irradiated from the ion gun G1 and the ion F2 with low energy for etching is irradiated from the ion gun G2. The irradiation from the ion guns G1 and G2 is may be performed with the time difference or may be performed simultaneously.

### Exemplary embodiment.

Hereinafter, the present invention will be described through the embodiment. However, the present invention is not limited to the embodiment.

### Conductive part and insulation part of the transparent conductive layer

First, as an object to be measured, the conductive part and the insulation part of the transparent conductive layer on the substrate will be described. In the exemplary embodiment, the conductive part and the insulation part were formed in the same method as the method of manufacturing the touch panel sensor described above with reference to FIG. 4 and FIGS. 5A to 6C. Specifically, in addition to the substrate being prepared, transparent conductive layer was formed on the substrate. Forming of the transparent conductive layer was performed at the temperature condition of 200°C using a film deposition apparatus with an ion plating method. The measuring of the sheet resistance was performed by a sheet resistance measuring instrument (Hiresta^{®}-UP MCP-HT450, Mitsubishi Chemical Analytech Co., Ltd.) One fourth of the area of the substrate on which the transparent conductive layer is formed was covered with mask, and a point of a predetermined position which is covered with the mask was measured by the sheet resistance measuring instrument.
Substrate: Alkali-free glass of 125
Transparent conductive layer: material indium tin oxide (ITO)
thickness 30 nm
sheet resistance (before ion implantation) 60 Ω/

Next, resin was applied on the transparent conductive layer as resist material, and the pattern of the conductive part and the insulation part were exposed using the photo mask, and then the developing was performed. In a state that the portion corresponding to the insulation part of the transparent conductive layer is covered with the resist, the oxygen ion implantation was performed using an ion implantation apparatus. Since the ion implantation apparatus is well known, and the detailed explanation will not be made here. Here, the implanted amount of oxygen ion was made to be changed depending on the position on one substrate. After implanting the oxygen ion, the resist is removed. In this way, conductive part and the insulation part of the transparent conductive layer on the substrate were formed.
Energy: 12keV
Implanting temperature: room temperature

### Sheet resistance on the insulation part

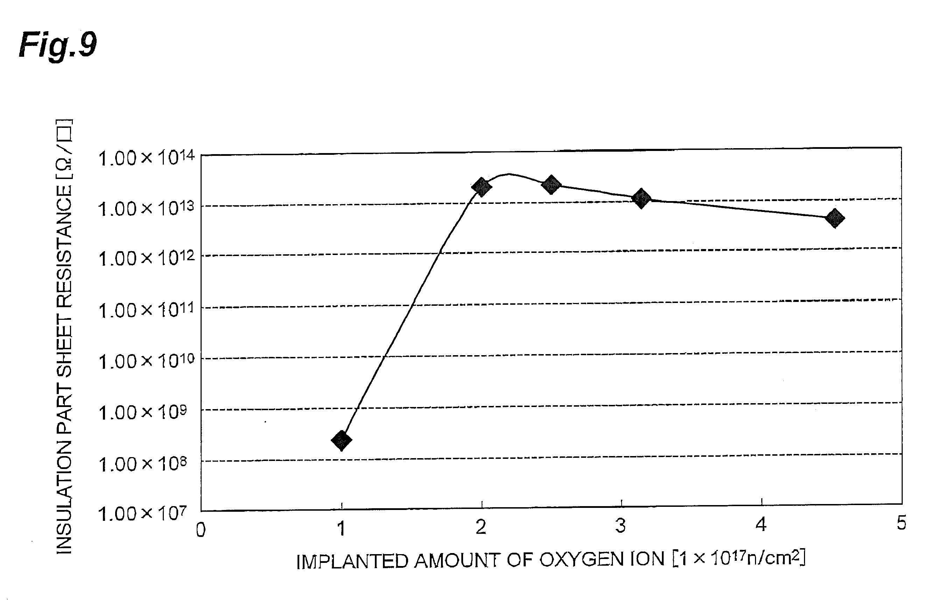

The sheet resistance of the insulation part on five points in the insulation part on the substrate was measured using the sheet resistance measuring instrument described above. The relationship between the implanted amount of oxygen ion and the sheet resistance on each point is plotted, and the graph traced based on the plot is illustrated in FIG. 9. As illustrated in FIG. 9, by implanting equal to or more than 2 × 10¹⁷ n / cm², it is understood that the sheet resistance of the insulation part can be secured equal to or larger than 1 × 10¹² Ω/ . By securing the sheet resistance equal to or larger than 1 × 10¹² Ω/ it is possible to make full use of the performance as the insulation part. Based on the above, it can be understood that, in order to form the insulation part, the implanted amount of oxygen ion of equal to or more than 2 × 10¹⁷ n / cm² (less than 5 × 10¹⁷ n / cm²) may be sufficient.

### Reflectance

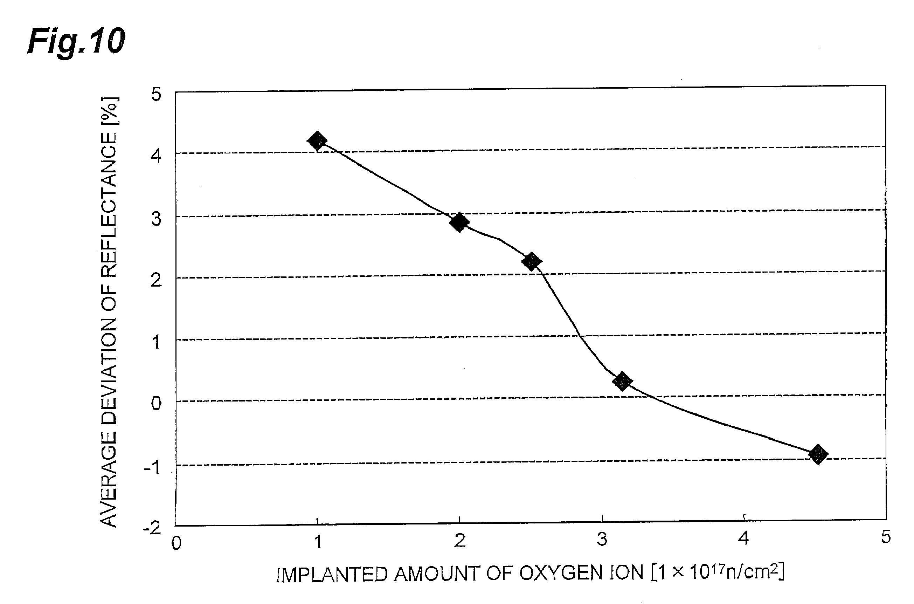

The reflectance of the conductive part and the insulation part on each point on the substrate were measured respectively, and the average deviation of the reflectance was calculated. Here, the reflectance of the conductive part and the insulation part was measured by the spectrophotometer (U-4100, manufactured by Hitachi High technologies Co., Ltd), and the average value of the values in the range of 380 to 780 nm which were obtained by correcting the visibility sensitivity, was calculated. The average deviation of the reflectance is a value obtained by calculating the difference between the average value of the reflectance of the conductive part and the average value of the reflectance of the insulation part. The relationship between the implanted amount of oxygen ion into the insulation part on each point and the average deviation of the reflectance was plotted, and the graph traced based on the plot is illustrated in FIG. 10. Here, if the average deviation of the reflectance is within the range of 0 ± 0.5%, it is possible to make the pattern of the insulation part difficult to be seen more reliably. When the implanted amount of oxygen ion is increased, the film thickness of the transparent conductive layer decreases due to the etching operation by the oxygen beam, and thus there is a possibility that the reflectance decreases. As illustrated in FIG. 10, by making the implanted amount of oxygen ion to be equal to more than 3 × 10¹⁷ n / cm² and equal to or less than 4 × 10¹⁷ n / cm², it is understood that the average deviation of the reflectance can be made equal to or less than 0 ± 0.5%.

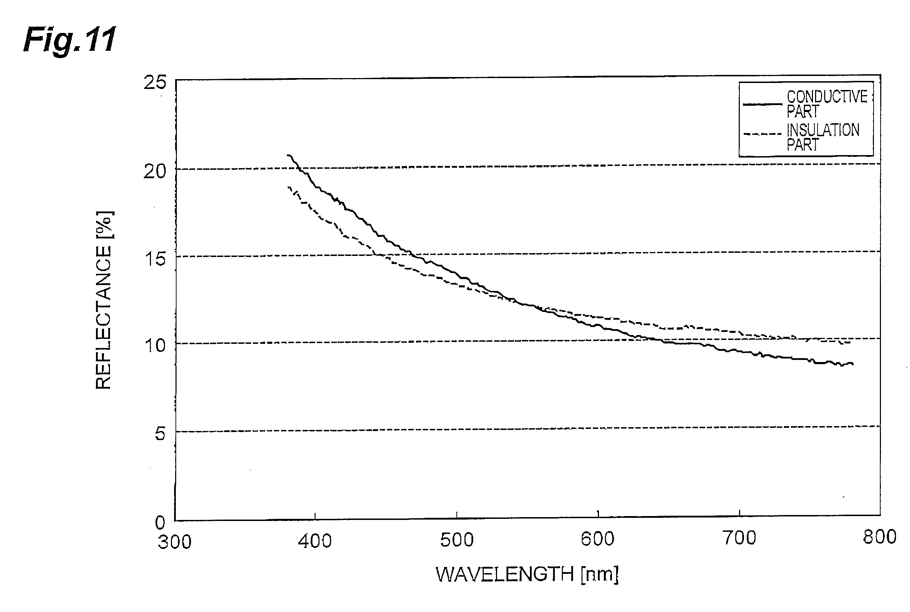

In addition, regarding the conductive part and the insulation part on the point where the implanted amount of oxygen ion is 3.1 × 10¹⁷ n / cm², a graph is illustrated in FIG. 11, in which the relationship between the reflectance and the wavelength is plotted. It is understood by FIG. 11 that the reflectance spectrum of the conductive part and the insulation part are substantially same. Even if there is a slight difference, as illustrated in FIG. 10, on the point where the implanted amount of oxygen ion is 3,1 × 10¹⁷ n / cm², the average deviation of the reflectance is within 0 ± 0.5%, and thus, the pattern of the insulation part cannot be seen. Therefore, the problem does not occur.

### Reference Signs List

- 10: touch panel sensor
- 11: substrate
- 12: transparent conductive layer
- 12A: conductive part
- 12B: insulation part
- 20: resist
- 20A: first region
- 20B: second region
- 100: manufacturing apparatus
- 101: film forming unit
- 102: patterning member preparation process execution part
- 103: Oxygen implantation unit

## Claims

1. A method of manufacturing a touch panel sensor that includes a substrate and a transparent conductive layer formed on the substrate, comprising:
a preparation step of preparing the substrate on which the transparent conductive layer is formed;
an installation step of installing a patterning member that has patterns in which a first region covering the transparent conductive layer and a second region causing the transparent conductive layer to be exposed are formed;
a patterning step of forming an insulation part by implanting at least one of irradiation object out of oxygen, oxygen ions, nitrogen, nitrogen ions, nitrogen oxide, and nitrogen oxide ions into the transparent conductive layer in the portion corresponding to the second region, and for patterning the transparent conductive layer in the portion covered by the first region as a conductive part; and
a removing step of removing the patterning member from the transparent conductive layer.

2. The method of manufacturing a touch panel sensor according to the Claim 1, further comprising:
forming a resist on the transparent conductive layer; and
installing the patterning member on the transparent conductive layer by causing the resist of the portion corresponding to the first region to be remained and removing the resist of the portion corresponding to the second region from the transparent conductive layer.

3. The method of manufacturing a touch panel sensor according to the Claim 1, further comprising:
installing the patterning member on the transparent conductive layer by preparing the patterning member on which the first region and the second region are formed in advance and disposing the patterning member on the transparent conductive layer.

4. The method of manufacturing a touch panel sensor according to any of the Claims 1 to 3, further comprising:
an etching step of etching a surface of the insulation part by irradiating the irradiation object having a lower energy than that of the irradiation object implanted in the patterning step.

5. A touch panel sensor, comprising:
a substrate; and
a transparent conductive layer formed on the substrate,
wherein the transparent conductive layer includes a conductive part that has a predetermined pattern, and an insulation part of which an amount of at least one of the oxygen, nitrogen, and nitrogen oxide is larger than that of the conductive part.
